# EUROPEAN PATENT APPLICATION

(11) **EP 4 557 400 A1**
(43) Date of publication of application: **21.05.2025**
(21) Application number: 24213899.8
(22) Date of filing: 19.11.2024
(51) Int. Cl.: H01M 4/505, H01M 10/0525, H01M 10/0567, H01M 10/0569

(54) **ELECTROLYTE FOR RECHARGEABLE LITHIUM BATTERY AND RECHARGEABLE LITHIUM BATTERY INCLUDING THE SAME**

(30) Priority: 20.11.2023 KR 20230160944
(71) Applicant: SAMSUNG SDI CO., LTD., Yongin-si, Gyeonggi-do 17084 (KR)
(72) Inventor: Koh, Sujeong, Yongin-si, Gyeonggi-do 17084 (KR); Seo, Jinah, Yongin-si, Gyeonggi-do 17084 (KR); Kim, Sundae, Yongin-si, Gyeonggi-do 17084 (KR); Jeong, Euisoo, Yongin-si, Gyeonggi-do 17084 (KR); Yang, Yeji, Yongin-si, Gyeonggi-do 17084 (KR); Lim, Jin-Hyeok, Yongin-si, Gyeonggi-do 17084 (KR); Kim, Sanghoon, Yongin-si, Gyeonggi-do 17084 (KR); Cho, Erang, Yongin-si, Gyeonggi-do 17084 (KR); Kwon, Bomee, Yongin-si, Gyeonggi-do 17084 (KR)
(74) Representative: Gulde & Partner

(57) **Abstract**

Disclosed are electrolytes and rechargeable lithium batteries including the same. The electrolyte includes a non-aqueous organic solvent, a lithium salt, and an additive. The additive includes Compound 1 represented by Chemical Formula 1 and Compound 2 represented by Chemical Formula 2.

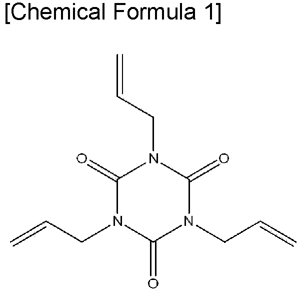

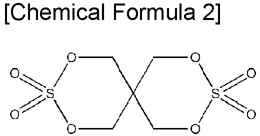

## Description

### BACKGROUND

### 1. Field

Embodiments of the present disclosure relate to an electrolyte for a rechargeable lithium battery and a rechargeable lithium battery including the same.

### 2. Description of the Related Art

Recently, with the rapid spread of battery using electronic devices, such as mobile phones, laptop computers, and electric vehicles, there is a rapidly increasing interest in rechargeable batteries having high energy density and high capacity. Therefore, intensive research has been conducted to improve performance of rechargeable lithium batteries.

A rechargeable lithium battery includes a positive electrode, a negative electrode, and an electrolyte, which positive and negative electrodes include an active material in which intercalation and deintercalation are possible, and generates electrical energy caused by oxidation and reduction reactions if lithium ions are intercalated and deintercalated.

A lithium salt dissolved in a non-aqueous organic solvent is used as the electrolyte of the rechargeable lithium battery. Characteristics of the rechargeable lithium battery are exhibited by complex reactions between the positive electrode and the electrolyte and between the negative electrode and the electrolyte. Accordingly, the use of a suitable or appropriate electrolyte is one variable for improvement of the rechargeable lithium battery.

### SUMMARY

An embodiment of the present disclosure provides an electrolyte for a rechargeable lithium battery having improved high-temperature lifetime characteristics.

An embodiment of the present disclosure provides a rechargeable lithium battery including the electrolyte.

According to an embodiment of the present disclosure, an electrolyte for a rechargeable lithium battery includes: a non-aqueous organic solvent; a lithium salt; and an additive. The additive may include Compound 1 represented by Chemical Formula 1 and Compound 2 represented by Chemical Formula 2.

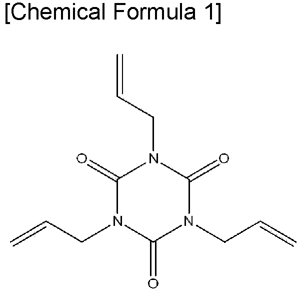

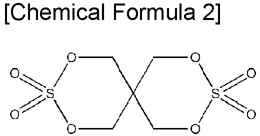

In a preferred embodiment, Compound 1 may be present in an amount of (about) 0.01 wt% to (about) 1 wt% relative to a total weight of the electrolyte.

In another preferred embodiment, the additive may present in an amount of (about) 0.1 wt% to (about) 2 wt% relative to a total weight of the electrolyte.

In another preferred embodiment, an amount of Compound 1 may be less than an amount of Compound 2.

Preferably, Compound 2 may be present in an amount of 1 to 10 parts by weight relative to 1 part by weight of the Compound 1.

In a further preferred embodiment, the non-aqueous organic solvent may comprise at least one selected from ethylene carbonate (EC), propylene carbonate (PC), propyl propionate (PP), ethylmethyl carbonate (EMC), dimethyl carbonate (DMC), diethyl carbonate (DEC), dipropyl carbonate (DPC), methylpropyl carbonate (MPC), ethylpropyl carbonate (EPC), methylethyl carbonate (MEC), and butylene carbonate (BC).

More preferably, the non-aqueous organic solvent may comprise ethylene carbonate (EC), ethylmethyl carbonate (EMC), and dimethyl carbonate (DMC).

In a further preferred embodiment, the lithium salt may comprise at least one selected from LiPF₆, LiBF₄, LiSbF₆, LiAsF₆, LiClO₄, LiAlO₂, LiAlCl₄, LiPO₂F₂, LiCI, Lil, LiN(SO₃C₂F₅)₂, Li(FSO₂)₂N, lithium bis(fluorosulfonyl)imide (LiFSI), and LiC₄F₉SO₃.

Preferably, a concentration of the lithium salt is in a range of (about) 0.1 M to (about) 2.0 M.

According to another aspect of the present disclosure, a rechargeable lithium battery includes: a positive electrode that includes a positive electrode active material; a negative electrode that includes a negative electrode active material; and the electrolyte discussed above.

In an embodiment, the positive electrode active material may comprise a lithium metal oxide represented by Chemical Formula 3,

[Chemical Formula 3] LiₐNi_{1-b-c}Co_{b}X_{c}O_{2-α}D_{α}

wherein in Chemical Formula 3,
X may be Al, Mn, Cr, Fe, Mg, Sr, V, or a rare-earth element,
D may be F, S, or P,
0.90≤a≤1.8 (e.g. a = 1),
0≤b≤0.5 (e.g. 0.1≤b≤0.5),
0≤c≤0.5 (e.g. 0.01≤c≤0.5), and
0≤α<2.

Preferably, the positive electrode active material comprises a lithium metal oxide represented by Chemical Formula 3-1,

[Chemical Formula 3-1] LiₐNi_{1-b-c}Co_{b}X_{c}O₂
wherein in Chemical Formula 3-1,
X is Al or Mn,
0.90≤a≤1.8 (e.g. a = 1),
0≤b≤0.5 (e.g. 0.1≤b≤0.5), and
0≤c≤0.5 (e.g. 0.01≤c≤0.5).

In an embodiment, the positive electrode active material may comprise a lithium metal oxide, which is LiNi_{0,33}Co_{0,33}Mn_{0,33}O₂ or LiNi_{0,84}Co_{0,12}Al_{0,04}O₂.

Preferably, the negative electrode active material may comprise a carbon-based negative electrode active material, a silicon (Si)-based negative electrode active material, a tin (Sn)-based negative electrode active material, or a combination thereof.

Preferably, the positive electrode further may comprise a binder and/or an electrically conductive material.

### BRIEF DESCRIPTION OF DRAWINGS

The accompanying drawings, together with the specification, illustrate embodiments of the subject matter of the present disclosure, and, together with the description, serve to explain principles of embodiments of the subject matter of the present disclosure.
FIG. 1 is a simplified conceptual diagram showing a rechargeable lithium battery according to an embodiment of the present invention.
FIG. 2 is a cutaway simplified perspective view showing a rechargeable lithium battery according to an embodiment of the present disclosure.
FIG. 3 is a simplified cross-sectional view showing a rechargeable lithium battery according to an embodiment of the present disclosure.
FIGS. 4-5 are simplified perspective views showing rechargeable lithium batteries according to embodiments of the present disclosure.

### DETAILED DESCRIPTION

In order to sufficiently understand the configuration and effect of the subject matter of the present disclosure, some embodiments of the present disclosure will be described with reference to the accompanying drawings. It should be noted, however, that the present disclosure is not limited to the following example embodiments, and may be implemented in various suitable forms. Rather, the example embodiments are provided only to illustrate embodiments of the present disclosure and let those skilled in the art fully know the scope of the present disclosure.

In this description, it will be understood that, if an element is referred to as being on another element, the element can be directly on the other element or intervening elements may be present therebetween. In the drawings, thicknesses of some components may be exaggerated for effectively explaining the technical contents. Like reference numerals refer to like elements throughout the specification.

Unless otherwise specially noted in this description, the expression of singular form may include the expression of plural form. In embodiments, unless otherwise specially noted, the phrase "A or B" may indicate "A but not B", "B but not A", and "A and B". The terms "comprises/includes" and/or "comprising/including" used in this description do not exclude the presence or addition of one or more other components.

As used herein, the term "combination thereof" may refer to a mixture, a stack, a composite, a copolymer, an alloy, a blend, and/or a reaction product.

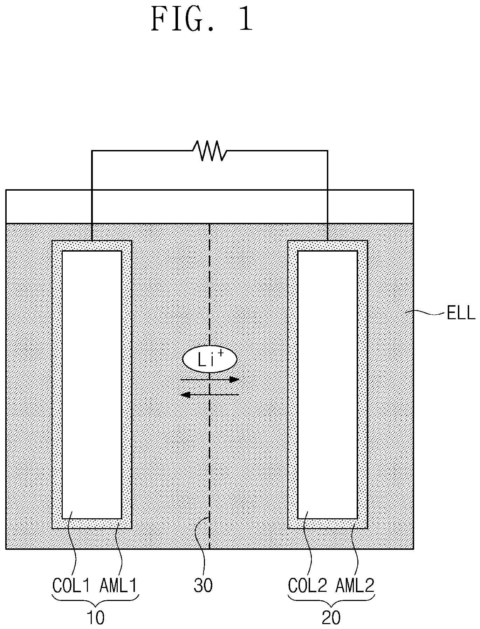

FIG. 1 is a simplified conceptual diagram showing a rechargeable lithium battery according to an embodiment of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced apart from each other across the separator 30. The separator 30 may be between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be a medium by which lithium ions are transferred between the positive electrode 10 and the negative electrode 20. In the electrolyte ELL, the lithium ions may move through the separator 30 toward one selected from the positive electrode 10 and the negative electrode 20.

### Positive Electrode 10

The positive electrode 10 for a rechargeable lithium battery may include a current collector COL1 and a positive electrode active material layer AML1 on the current collector COL1. The positive electrode active material layer AML1 may include a positive electrode active material and further include a binder and/or a conductive material (e.g., an electrically conductive material).

For example, the positive electrode 10 may further include an additive that can serve as a sacrificial positive electrode.

An amount of the positive electrode active material may range from (about) 90 wt% to (about) 99.5 wt% based on 100 wt% of the positive electrode active material layer AML1. Amounts of the binder and the conductive material may be (about) 0.5 wt% to (about) 5 wt% based on 100 wt% of the positive electrode active material layer AML1.

The binder may serve to improve attachment of positive electrode active material particles to each other and also to improve attachment of the positive electrode active material to the current collector COL1. The binder may include, for example, polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and/or nylon, but the present invention is not limited thereto.

The conductive material may be used to provide an electrode with conductivity (e.g., electrical conductivity), and any suitable conductive material without causing chemical change of a battery (e.g., that does not cause an undesirable change in the rechargeable lithium battery) may be used as the conductive material to constitute the battery. The conductive material may include, for example, a carbon-based material such as natural graphite, artificial graphite, carbon black, acetylene black, Ketjenblack, carbon fiber, carbon nano-fiber, and/or carbon nano-tube; a metal powder and/or metal fiber containing one or more selected from copper, nickel, aluminum, and silver; a conductive polymer (e.g., an electrically conductive polymer) such as a polyphenylene derivative; or a mixture thereof.

Al may be used as the current collector COL1, but the present disclosure is not limited thereto.

### Positive Electrode Active Material

The positive electrode active material in the positive electrode active material layer AML1 may include a compound (e.g., lithiated intercalation compound) that can reversibly intercalate and de-intercalate lithium. For example, the positive electrode active material may include at least one kind of composite oxide including lithium and a metal that is selected from cobalt, manganese, nickel, and a combination thereof.

The composite oxide may include a lithium transition metal composite oxide, for example, a lithium-nickel-based oxide, a lithium-cobalt-based oxide, a lithium-manganese-based oxide, lithium-iron-phosphate-based compounds, a cobalt-free nickel-manganese-based oxide, or a combination thereof.

For example, the positive electrode active material may include a compound represented by one of chemical formulae below. LiₐA_{1-b}X_{b}O_{2-c}D_{c} (0.90≤a≤1.8, 0≤b≤0.5, 0≤c≤0.05), LiₐMn_{2-b}X_{b}O_{4-c}D_{c} (0.90≤a≤1.8, 0≤b≤0.5, 0≤c≤0.05), LiₐNi_{1-b-c}Co_{b}X_{c}O_{2-α}D_{α} (0.90≤a≤1.8, 0≤b≤0.5, 0≤c≤0.5, 0<α<2), LiₐNi_{1-b-c}Mn_{b}X_{c}O_{2-α}D_{α} (0.90≤a≤1.8, 0≤b≤0.5, 0≤c≤0.5, 0<α<2), LiₐNi_{b}Co_{c}L¹_{d}GₑO₂ (0.90≤a≤1.8, 0≤b≤0.9, 0≤c≤0.5, 0≤d≤0.5, 0≤e≤0.1), LiₐNiG_{b}O₂ (0.90≤a≤1.8, 0.001≤b≤0.1), LiₐCoG_{b}O₂ (0.90≤a≤1.8, 0.001≤b≤0.1), LiₐMn_{1-b}G_{b}O₂ (0.90≤a≤1.8, 0.001≤b≤0.1), LiₐMn₂G_{b}O₄ (0.90≤a≤1.8, 0.001≤b≤0.1), LiₐMn_{1-g}G_{g}PO₄ (0.90≤a≤1.8, 0≤g≤0.5), Li_{(3-f)}Fe₂(PO₄)₃ (0≤f≤2), and LiₐFePO₄ (0.90≤a≤1.8).

In the chemical formulae above, A is Ni, Co, Mn; X is Al, Ni, Co, Mn, Cr, Fe, Mg, Sr, V, or a rare element; D is O, F, S, P; G is Al, Cr, Mn, Fe, Mg, La, Ce, Sr, V; and L¹ is Mn, Al. For example, the positive electrode active material may be LiNi_{0,33}Co_{0,33}Mn_{0,33}O₂ or LiNi_{0,84}Co_{0,12}Al_{0,04}O₂, preferably LiNi_{0,84}Co_{0,12}Al_{0,04}O₂.

For example, in LiₐNi_{1-b-c}Co_{b}X_{c}O_{2-α}D_{α;} X is selected from Al, Ni, Co, Mn, Cr, Fe, Mg, Sr, V, and a rare-earth element (or a combination thereof), D is selected from O, F, S, and P (or a combination thereof), 0.90≤a≤1.8, 0≤b≤0.5, 0≤c≤0.5, and 0<α<2.

For example, the positive electrode active material may be a high nickel-based positive electrode active material having a nickel content of equal to or greater than (about) 80 mol%, equal to or greater than (about) 85 mol%, equal to or greater than (about) 90 mol%, equal to or greater than (about) 91 mol%, or equal to or greater than (about) 94 mol% and equal to or less than (about) 99 mol% based on 100 mol% of metal devoid of lithium in the lithium transition metal composite oxide. The high nickel-based positive electrode active material may achieve high capacity and thus may be applied to a high-capacity and high-density rechargeable lithium battery.

### Negative Electrode 20

The negative electrode 20 for a rechargeable lithium battery may include a current collector COL2 and a negative electrode active material layer AML2 on the current collector COL2. The negative electrode active material layer AML2 may include a negative electrode active material and may further include a binder and/or a conductive material (e.g., an electrically conductive material).

For example, the negative electrode active material layer AML2 may include a negative electrode active material of (about) 90 wt% to (about) 99 wt%, a binder of (about) 0.5 wt% to (about) 5 wt%, and a conductive material (e.g., an electrically conductive material) of (about) 0 wt% to (about) 5 wt%.

The binder may serve to improve attachment of negative electrode active material particles to each other and also to improve attachment of the negative electrode active material to the current collector COL2. The binder may include a non-aqueous binder, an aqueous binder, a dry binder, or a combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include styrene-butadiene rubber, (meth)acrylated styrene-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or a combination thereof.

If an aqueous binder is used as the negative electrode binder, a cellulose-based compound capable of providing or increasing viscosity may further be included. The cellulose-based compound may include one or more selected from carboxymethyl cellulose, hydroxypropylmethyl cellulose, methyl cellulose, and alkali metal salts thereof. The alkaline metal may include Na, K, and/or Li.

The dry binder may include a fibrillizable polymer material, for example, polytetrafluoroethylene, polyvinylidene fluoride, polyvinylidene fluoride-hexafluoropropylene copolymer, polyethylene oxide, or a combination thereof.

The conductive material may be used to provide an electrode with conductivity (e.g., electrical conductivity), and any suitable conductive material without causing chemical change of a battery (e.g., that does not cause an undesirable chemical change in the rechargeable lithium battery) may be used as the conductive material to constitute the battery. For example, the conductive material may include a carbon-based material such as natural graphite, artificial graphite, carbon black, acetylene black, Ketjenblack, carbon fiber, carbon nano-fiber, and/or carbon nano-tube; a metal powder and/or metal fiber including one or more selected from copper, nickel, aluminum, and silver; a conductive polymer (e.g., an electrically conductive polymer) such as a polyphenylene derivative; or a mixture thereof.

The current collector COL2 may include a copper foil, a nickel foil, a stainless-steel foil, a titanium foil, a nickel foam, a copper foam, a polymer substrate coated with a conductive metal (e.g., an electrically conductive metal), or a combination thereof.

### Negative Electrode Active Material

The negative electrode active material in the negative electrode active material layer AML2 may include a material that can reversibly intercalate and de-intercalate lithium ions, lithium metal, a lithium metal alloy, a material that can dope and de-dope lithium, and/or a transition metal oxide.

The material that can reversibly intercalate and de-intercalate lithium ions may include a carbon-based negative electrode active material, for example, crystalline carbon, amorphous carbon, or a combination thereof. For example, the crystalline carbon may include graphite such as non-shaped, sheet-shaped, flake-shaped, sphere-shaped, and/or fiber-shaped natural and/or artificial graphite, and the amorphous carbon may include soft carbon, hard carbon, mesophase pitch carbon, and/or calcined coke.

The lithium metal alloy may include an alloy of lithium and a metal that is selected from Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material and/or a Sn-based negative electrode active material. The Si-based negative electrode active material may include silicon, silicon-carbon composite, SiOx (0<x<2), Si-Q alloy (where Q is alkali metal, alkaline earth metal, Group 13 element, Group 14 element (except for Si), Group 15 element, Group 16 element, transition metal, rare-earth element, or a combination thereof), or a combination thereof. The Sn-based negative electrode active material may include Sn, SnO₂, a Sn-based alloy, or a combination thereof.

The silicon-carbon composite may be a composite of silicon and amorphous carbon. According to an embodiment, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) on a surface of the secondary particle. The amorphous carbon may also be between the primary silicon particles, and for example, the primary silicon particles may be coated with the amorphous carbon. The secondary particles may be present dispersed in an amorphous carbon matrix.

The silicon-carbon composite may further include crystalline carbon. For example, the silicon-carbon composite may include a core including crystalline carbon and silicon particles and may also include an amorphous carbon coating layer on a surface of the core.

The Si-based negative electrode active material and/or the Sn-based negative electrode active material may be used in combination with a carbon-based negative electrode active material.

### Separator 30

Based on a type (or kind) of the rechargeable lithium battery, the separator 30 may be between positive electrode 10 and the negative electrode 20. The separator 30 may include one or more selected from polyethylene, polypropylene, and polyvinylidene fluoride, and may have a multi-layered separator thereof such as a polyethylene/polypropylene bilayered separator, a polyethylene/polypropylene/polyethylene tri-layered separator, and/or a polypropylene/polyethylene/polypropylene tri-layered separator.

The separator 30 may include a porous substrate and a coating layer on one or opposite surfaces of the porous substrate, which coating layer includes an organic material, an inorganic material, or a combination thereof.

The porous substrate may be a polymer layer including one selected from polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon, and polytetrafluoroethylene, or may be a copolymer or mixture including two or more of the materials mentioned above.

The organic material may include a polyvinylidenefluoride-based copolymer and/or a (meth)acrylic copolymer.

The inorganic material may include an inorganic particle selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, Boehmite, or a combination thereof, but the present disclosure is not limited thereto.

The organic material and the inorganic material may be present mixed together in one coating layer or may be present as a stack of a coating layer including the organic material and a coating layer including an inorganic material.

### Electrolyte ELL

The electrolyte ELL for a rechargeable lithium battery may include a non-aqueous organic solvent and a lithium salt.

The non-aqueous organic solvent may serve as a medium that transmits ions that participate in an electrochemical reaction of a battery.

The non-aqueous organic solvent may include a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), and/or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, and/or caprolactone.

The ether-based solvent may include dibutyl ether, tetraglyme, diglyme, dimethoxyethane, 2-methyltetrahydrofuran, 2.5-dimethyltetrahydrofuran, and/or tetrahydrofuran. The ketone-based solvent may include cyclohexanone. The aprotic solvent may include nitriles such as R-CN (where R is a hydrocarbon group having a C2 to C20 linear, branched, or cyclic structure and may include a double bond, an aromatic ring, and/or an ether group); amides such as dimethylformamide; dioxolanes such as 1,3-dioxolane and/or 1,4-dioxolane; and/or sulfolanes.

The non-aqueous organic solvent may be used alone or in a mixture of two or more substances.

In embodiments, if a carbonate-based solvent is used, a cyclic carbonate and a chain carbonate may be mixed together and used, and the cyclic carbonate and the chain carbonate may be mixed together in a volume ratio of (about) 1:1 to (about) 1:9.

The lithium salt may be a material that is dissolved in the non-aqueous organic solvent to serve as a supply source of lithium ions in a battery and plays a role in enabling a basic operation of a rechargeable lithium battery and in promoting the movement of lithium ions between positive and negative electrodes. The lithium salt may include, for example, at least one selected from LiPF₆, LiBF₄, LiSbF₆, LiAsF₆, LiClO₄, LiAlO₂, LiAlCl₄, LiPO₂F₂, LiCI, Lil, LiN(SO₃C₂F₅)₂, Li(FSO₂)₂N, lithium bis(fluorosulfonyl)imide (LiFSI), LiC₄F₉SO₃, LiN(CₓF₂ₓ₊₁SO₂)(C_{y}F_{2y+1}SO₂) (where x and y are integers between 1 to 20), lithium trifluoromethane sulfonate, lithium tetrafluoroethanesulfonate, lithium difluoro(oxalate)borate(LiDFOB), lithium difluorobis(oxalato)phosphate (LiDFBOP), and lithium bis(oxalato) borate (LiBOB)

The lithium salt may include LiPF₆.

The lithium salt may be present in a concentration of (about) 0.1 M to (about) 2.0 M.

The additive may include Compound 2 represented by Chemical Formula 2 below.

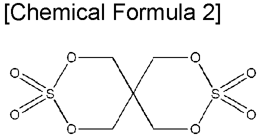

Compound 2 may form a stable film on an electrode surface of a rechargeable lithium battery to improve cycle characteristics of the rechargeable lithium battery.

Compound 2 may be present in an amount of (about) 0.01 wt% to (about) 10 wt% relative to the total weight of the electrolyte. For example, Compound 2 may be present in an amount of 0.05 wt% to 10 wt%, 0.05 wt% to 7 wt%, 0.05 wt% to 2 wt%, 0.1 wt% to 10 wt%, 0.1 wt% to 7 wt%, 0.1 wt% to 2 wt%, 0.5 wt% to 10 wt%, 0.5 wt% to 7 wt%, 0.5 wt% to 2 wt%, or most preferred 0.5 wt% to 2 wt% or 0.5 wt% to 1 wt% relative to the total weight of the electrolyte. For example, Compound 2 may be present in an amount of equal to or greater than (about) 0.05 wt%, 0.1 wt%, 0.5 wt%, or 1 wt% relative to the total weight of the electrolyte. Compound 2 may be present in an amount of equal to or less than (about) 7 wt%, (about) 5 wt%, or (about) 2 wt% relative to the total weight of the electrolyte. If Compound 2 is present in the aforementioned concentration ranges, resistance (e.g., electrical resistance) of an electrode surface of a rechargeable lithium battery may be moderately decreased to improve battery output performance.

The additive may further include Compound 1 represented by Chemical Formula 1 below.

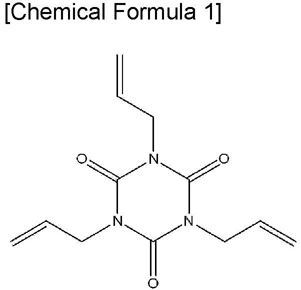

Compound 1 may act, through a combination with Compound 2, as a cross-linker on a film formed on an electrode surface of a rechargeable lithium battery, such that a film having increased compactness may be formed on an electrode.

Compound 1 may be present in an amount of (about) 0.01 wt% to (about) 1 wt% relative to the total weight of the electrolyte. Preferably, Compound 1 may be present in an amount of 0.05 wt% to 1 wt%, 0.1 wt% to 1 wt%, 0.1 wt% to 0.75 wt%, or 0.1 wt% to 0.5 wt% relative to the total weight of the electrolyte. For example, Compound 1 may be present in an amount of equal to or less than (about) 0.05 wt%, equal to or less than (about) 0.1 wt%, or equal to or less than (about) 0.2 wt% relative to the total weight of the electrolyte. Compound 1 may be present in an amount of (about) 0.5 wt% to (about) 0.75 wt% relative to the total weight of the electrolyte. If the amount of Compound 1 is in the aforementioned ranges, Compound 1 may serve not only to sufficiently act as a cross-linker to endow a film with rigidity, but also to moderately reduce a resistance (e.g., electrical resistance) of an electrode surface of a rechargeable lithium battery to improve battery output performance.

An amount of Compound 1 may be less than that of Compound 2.

Compound 2 may be present in an amount of (about) 1 to 10 parts by weight relative to 1 part by weight of Compound 1. For example, Compound 2 may be present in an amount of (about) 1 to 5 parts by weight, (about) 1 to 2.5 parts by weight, or (about) 1 to 2 parts by weight relative to 1 part by weight of Compound 1. If the amount of Compound 1 is in the aforementioned ranges, Compound 1 may serve not only to sufficiently act as a cross-linker to endow a film with rigidity, but also to moderately reduce a resistance (e.g., electrical resistance) of an electrode surface of a rechargeable lithium battery to improve battery output performance.

The additive may be present in an amount of (about) 0.1 wt% to (about) 2 wt% relative to the total weight of the electrolyte. For example, the additive may be present in an amount of (about) 0.1 wt% to (about) 1.5 wt%, (about) 0.1 wt% to (about) 1.2 wt%, (about) 0.1 wt% to (about) 0.7 wt%, (about) 0.6 wt% to (about) 1.5 wt%, (about) 0.7 wt% to (about) 1.5 wt%, (about) 0.6 wt% to (about) 1.2 wt%, or (about) 0.7 wt% to (about) 1.2 wt% relative to the total weight of the electrolyte. If the additive is included in excess of the above ranges, viscosity of an electrolyte including the additive may be excessively increased and reduce wettability to positive and negative electrodes. If the additive is included in a small amount less than the above ranges, the effect mentioned above may be insignificant.

### Rechargeable Lithium Battery

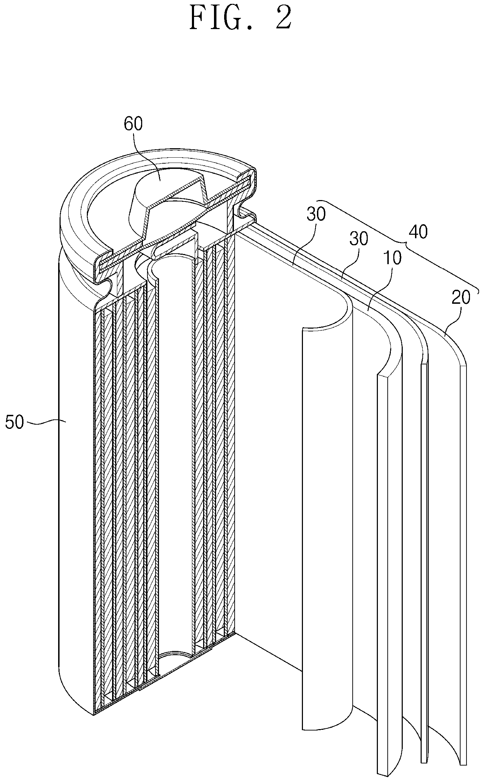

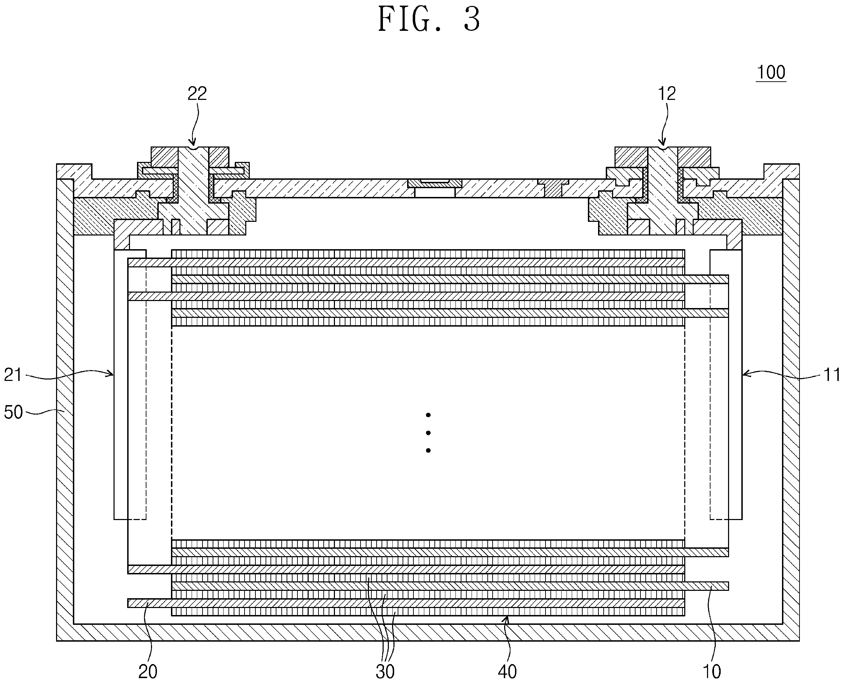

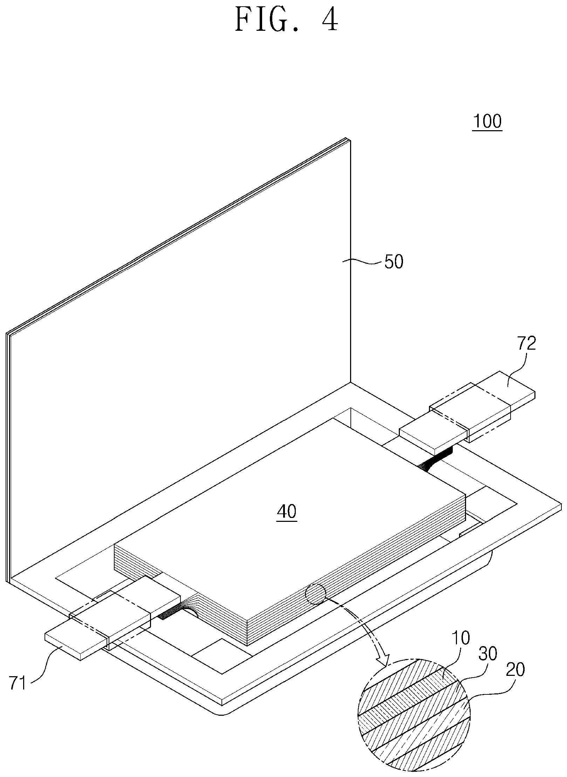

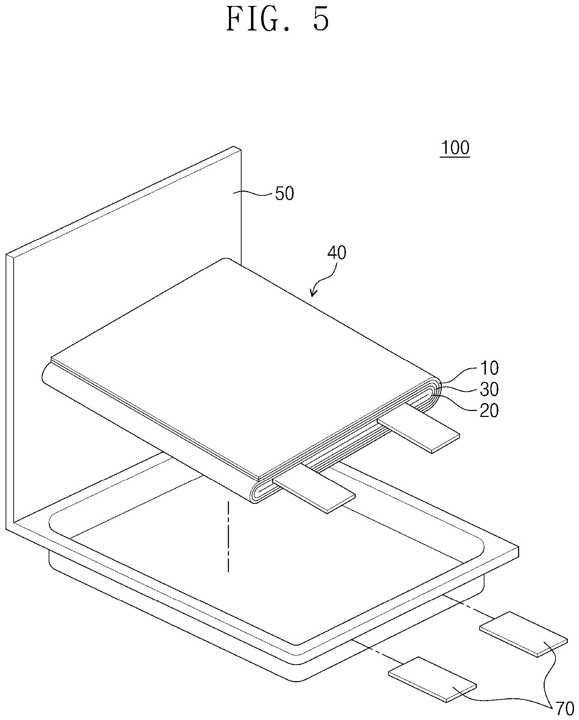

Based on a shape of a rechargeable lithium battery, the rechargeable lithium battery may be classified into cylindrical, prismatic, pouch, and/or coin types (or kinds). FIGS. 2-5 are simplified diagrams showing rechargeable lithium batteries according to embodiments. FIG. 2 shows a cylindrical battery, FIG. 3 shows a prismatic battery, and FIGS. 4-5 show pouch-type batteries. Referring to FIGS. 2-4, a rechargeable lithium battery 100 may include an electrode assembly 40 in which a separator 30 is between a positive electrode 10 and a negative electrode 20, and may also include a casing 50 in which the electrode assembly 40 is accommodated. The positive electrode 10, the negative electrode 20, and the separator 30 may be impregnated with an electrolyte. The rechargeable lithium battery 100 may include a sealing member 60 that seals the casing 50 as illustrated in FIG. 2. In embodiments, as illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4-5, the rechargeable lithium battery 100 may include an electrode tab 70 (FIG. 5), or a positive electrode tab 71 and a negative electrode tab 72 (FIG. 4), which serves as an electrical path that externally induces a current generated in the electrode assembly 40.

A rechargeable lithium battery according to an embodiment of the present disclosure may be applied to automotive vehicles, mobile phones, and/or any other suitable electrical devices, but the present disclosure is not limited thereto.

The following will describe Examples and Comparative Examples of the present disclosure. The following Examples are only embodiments of the present disclosure, and the present disclosure is not limited to the following Examples.

### Examples and Comparative Examples

### Example 1

### (1) Preparation of Electrolyte

LiPF₆ of 1.0 M was dissolved in a non-aqueous organic solvent in which ethylene carbonate (EC), ethylmethyl carbonate (EMC), and dimethyl carbonate (DMC) were mixed together in a volume ratio of 20:20:60, and an additive was added to prepare an electrolyte.

As the additive, Compound 1 represented by Chemical Formula 1 below was added in an amount of 0.2 wt% relative to the total amount of the electrolyte, and Compound 2 represented by Chemical Formula 2 was added in an amount of 1 wt% relative to the total amount of the electrolyte.

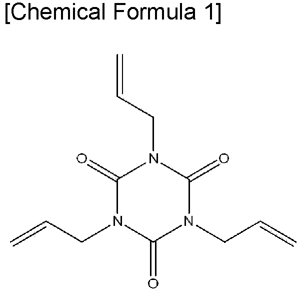

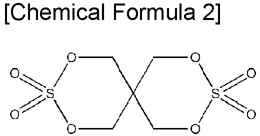

### (2) Fabrication of Rechargeable Lithium Battery

LiNi_{0.91}Co_{0.08}Al_{0.01}O₂ (NCA) as a positive electrode active material, polyvinylidene fluoride as a binder, and acetylene black as a conductive material were mixed together in a weight ratio of 96:3:1, and the resultant mixture was distributed in N-methyl pyrrolidone to prepare a positive electrode active material slurry.

The positive electrode active material slurry was coated on an Al foil of 15 µm in thickness, dried at a temperature of 100 °C, and then pressed to manufacture a positive electrode.

A silicon negative electrode active material, a styrene-butadiene rubber binder, and carboxymethyl cellulose were mixed together in a weight ratio of 98:1:1, and dispersed in distilled water to prepare a negative electrode active material slurry.

The negative electrode active material slurry was coated on a copper (Cu) foil having a thickness of 10 µm, dried at 100 °C, and then pressed to manufacture a negative electrode.

The positive electrode, the negative electrode, and a 10 µm-thick polyethylene separator were assembled to manufacture an electrode assembly, and the electrolyte was introduced to fabricate a rechargeable lithium battery.

### Example 2

A rechargeable lithium battery was fabricated by the same method as that of Example 1, except that, as an additive, Compound 1 represented by Chemical Formula 1 was added in an amount of 0.5 wt% relative to the total amount of the electrolyte, and Compound 2 represented by Chemical Formula 2 was added in an amount of 1 wt% relative to the total amount of the electrolyte.

### Example 3

A rechargeable lithium battery was fabricated by the same method as that of Example 1, except that, as an additive, Compound 1 represented by Chemical Formula 1 was added in an amount of 0.2 wt% relative to the total amount of the electrolyte, and Compound 2 represented by Chemical Formula 2 was added in an amount of 0.5 wt% relative to the total amount of the electrolyte.

### Example 4

A rechargeable lithium battery was fabricated by the same method as that of Example 1, except that, as an additive, Compound 1 represented by Chemical Formula 1 was added in an amount of 0.1 wt% relative to the total amount of the electrolyte, and Compound 2 represented by Chemical Formula 2 was added in an amount of 0.5 wt% relative to the total amount of the electrolyte.

### Comparative Example 1

A rechargeable lithium battery was fabricated by the same method as that of Example 1, except that no additive was added.

### Comparative Example 2

A rechargeable lithium battery was fabricated by the same method as that of Example 1, except that, as an additive, Compound 4 represented by Chemical Formula 4 below was added in an amount of 0.2 wt% relative to the total amount of the electrolyte, and Compound 2 represented by Chemical Formula 2 was added in an amount of 1 wt% relative to the total amount of the electrolyte.

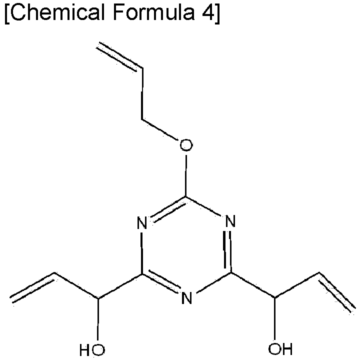

### Comparative Example 3

A rechargeable lithium battery was fabricated by the same method as that of Embodiment 1, except that, as an additive, Compound 4 represented by Chemical Formula 4 was added in an amount of 0.5 wt% relative to the total amount of the electrolyte, and Compound 2 represented by Chemical Formula 2 was added in an amount of 1 wt% relative to the total amount of the electrolyte.

### Comparative Example 4

A rechargeable lithium battery was fabricated by the same method as that of Example 1, except that, as an additive, Compound 5 represented by Chemical Formula 5 below was added in an amount of 0.2 wt% relative to the total amount of the electrolyte, and Compound 2 represented by Chemical Formula 2 was added in an amount of 1 wt% relative to the total amount of the electrolyte.

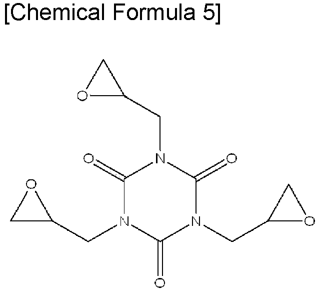

### Comparative Example 5

A rechargeable lithium battery was fabricated by the same method as that of Example 1, except that, as an additive, Compound 5 represented by Chemical Formula 5 was added in an amount of 0.5 wt% relative to the total amount of the electrolyte, and Compound 2 represented by Chemical Formula 2 was added in an amount of 1 wt% relative to the total amount of the electrolyte.

### Comparative Examples 6, 7, and 8

A rechargeable lithium battery was fabricated by the same method as that of Example 1, except that, as an additive, Compound 1 represented by Chemical Formula 1 was respectively added in an amount of 0.2 wt%, 0.5 wt%, and 1 wt% relative to the total amount of the electrolyte, and no Compound 2 was added.

### Comparative Examples 9, 10, and 11

A rechargeable lithium battery was fabricated by the same method as that of Example 1, except that, as an additive, no Compound 1 was added, and Compound 2 represented by Chemical Formula 2 was respectively added in an amount of 0.2 wt%, 0.5 wt%, and 1 wt% relative to the total amount of the electrolyte.

### Comparative Examples 12, 13, 14, and 15

A rechargeable lithium battery was fabricated by the same method as that of Example 1, except that Compound 1 represented by Chemical Formula 1 and Compound 2 represented by Chemical Formula 2 were added in an amount of a weight ratio of substantially 1:1. In these cases, each of Compound 1 and Compound 2 was respectively added in an amount of 0.2 wt%, 0.5 wt%, 1 wt%, and 2 wt% relative to the total amount of the electrolyte.

### Comparative Examples 16, 17, and 18

A rechargeable lithium battery was fabricated by the same method as that of Example 1, except that an amount of Compound 1 represented by Chemical Formula 1 was greater than an amount of Compound 2 represented by Chemical Formula 2. In these cases, Compound 1 was respectively added in an amount of 2 wt%, 1 wt%, and 1 wt% relative to the total amount of the electrolyte, and Compound 2 was respectively added in an amount of 1 wt%, 0.5 wt%, and 0.2 wt% relative to the total amount of the electrolyte.

### Comparative Example 19

A rechargeable lithium battery was fabricated by the same method as that of Example 1, except that, as an additive, Compound 1 represented by Chemical Formula 1 was added in an amount of 1 wt% relative to the total amount of the electrolyte, and Compound 2 represented by Chemical Formula 2 was added in an amount of 2 wt% relative to the total amount of the electrolyte.

Table 1 below lists amounts of the compounds included in the electrolyte additives according to each of the Examples and Comparative Examples.

**Table 1**

| Category | Compound 1 (wt%) | Compound 2 (wt%) | Compound 4 (wt%) | Compound 5 (wt%) |
|---|---|---|---|---|
| Example 1 | 0.2 | 1 | - | - |
| Example 2 | 0.5 | 1 | - | - |
| Example 3 | 0.2 | 0.5 | - | - |
| Example 4 | 0.1 | 0.5 | - | - |
| Comparative Example 1 | - | - | - | - |
| Comparative Example 2 | - | 1 | 0.2 | - |
| Comparative Example 3 | - | 1 | 0.5 | - |
| Comparative Example 5 | - | 1 | - | 0.2 |
| Comparative Example 5 | - | 1 | - | 0.5 |
| Comparative Example 6 | 0.2 | - | - | - |
| Comparative Example 7 | 0.5 | - | - | - |
| Comparative Example 8 | 1 | - | - | - |
| Comparative Example 9 | - | 0.2 | - | - |
| Comparative Example 10 | - | 0.5 | - | - |
| Comparative Example 11 | - | 1 | - | - |
| Comparative Example 12 | 0.2 | 0.2 | - | - |
| Comparative Example 13 | 0.5 | 0.5 | - | - |
| Comparative Example 14 | 1 | 1 | - | - |
| Comparative Example 15 | 2 | 2 | - | - |
| Comparative Example 16 | 2 | 1 | - | - |
| Comparative Example 17 | 1 | 0.5 | - | - |
| Comparative Example 18 | 1 | 0.5 | - | - |
| Comparative Example 19 | 1 | 2 | - | - |

### Evaluation Example

The rechargeable lithium batteries were evaluated by the following methods.

### Evaluation 1: Storage Effect at high temperature (60 °C)

After the rechargeable lithium batteries according to the Examples and Comparative Examples were allowed to measure an initial remaining capacity (0.33 C discharge), a recovery capacity (0.33 C charge under constant current and constant voltage (CC-CV) and then 0.33 C discharge), and a direct-current internal resistance (DCIR) as ΔV/ΔI (voltage change/current change), a maximum energy state inside the battery was changed into a full charge state (SOC 100%), the battery was stored in this state for 80 days and then a direct-current internal resistance was measured to calculate a DCIR increase rate (%), and then stored for 80 days in a chamber at 60 °C, and therefore a remaining capacity, a recovery capacity, and a direct-current internal resistance were measured and calculated according to Equation 1 below and Table 2 lists the results as follows. Remaining capacity (%) = (discharge capacity after 80 days/initial discharge capacity) × 100 Recovery capacity (%) = (recovery capacity after 80 days/initial recovery capacity) × 100 DCIR increase rate (%) = {(DCIR after 80 days/initial DCIR) -1} × 100

**Table 2**

| Category | Remaining capacity (%) | Recovery capacity (%) | DCIR increase rate (%) |
|---|---|---|---|
| Example 1 | 90.4 | 90.4 | 32.5 |
| Example 2 | 90.9 | 92.5 | 25.8 |
| Example 3 | 91.4 | 91.5 | 24.8 |
| Example 4 | 90.4 | 90.5 | 22.8 |
| Comparative Example 1 | 66.1 | 70.2 | 88.3 |
| Comparative Example 2 | 88.4 | 87.4 | 41.5 |
| Comparative Example 3 | 85.4 | 85.5 | 45.5 |
| Comparative Example 5 | 89.4 | 87.4 | 40.5 |
| Comparative Example 5 | 87.4 | 80.5 | 50.5 |
| Comparative Example 6 | 84.5 | 86.5 | 54.4 |
| Comparative Example 7 | 86.4 | 87.0 | 52.5 |
| Comparative Example 8 | 85.4 | 84.0 | 62.5 |
| Comparative Example 9 | 69.1 | 72.2 | 85.3 |
| Comparative Example 10 | 76.1 | 80.2 | 84.3 |
| Comparative Example 11 | 82.5 | 86.0 | 54.8 |
| Comparative Example 12 | 82.0 | 83.0 | 54.9 |
| Comparative Example 13 | 86.9 | 84.0 | 53.5 |
| Comparative Example 14 | 84.4 | 83.0 | 63.0 |
| Comparative Example 15 | 77.4 | 78.2 | 57.4 |
| Comparative Example 16 | 64.5 | 67.2 | 91.3 |
| Comparative Example 17 | 69.5 | 71.2 | 87.3 |
| Comparative Example 18 | 60.5 | 64.2 | 82.3 |
| Comparative Example 19 | 87.9 | 85.0 | 58.5 |

### Evaluation 2: Lifetime Effect at high temperature (45 °C)

The rechargeable lithium batteries according to the Examples and Comparative Examples were charged and discharged in a chamber at 45 °C for 300 cycles under the condition of 0.5 C to 1.0 C charge (CC/CV, 4.25 V, 0.025 C cut-off) and 1.0 C discharge (CC, 2.75 V cut-off), and then a remaining capacity and a direct-current internal resistance (DCIR) were measured and calculated according to Equation 2 below and Table 3 lists the results as follows. Remaining capacity (%) = (discharge capacity after 300 cycles/initial discharge capacity) × 100 DCIR increase rate (%) = {(DCIR after 300 cycles/initial DCIR) -1} × 100

**Table 3**

| Category | Remaining capacity (%) | DCIR increase rate (%) |
|---|---|---|
| Example 1 | 88.1 | 5.6 |
| Example 2 | 88.2 | 3.5 |
| Example 3 | 88.3 | 4.5 |
| Example 4 | 88.3 | 5.0 |
| Comparative Example 1 | 86.2 | 25.5 |
| Comparative Example 2 | 83.1 | 11.6 |
| Comparative Example 3 | 81.2 | 16.6 |
| Comparative Example 5 | 81.1 | 14.6 |
| Comparative Example 5 | 77.2 | 18.6 |
| Comparative Example 6 | 87.1 | 8.2 |
| Comparative Example 7 | 87.6 | 7.6 |
| Comparative Example 8 | 86.6 | 10.6 |
| Comparative Example 9 | 87.3 | 20.5 |
| Comparative Example 10 | 87.6 | 19.5 |
| Comparative Example 11 | 87.8 | 10.8 |
| Comparative Example 12 | 84.1 | 10.2 |
| Comparative Example 13 | 81.6 | 10.6 |
| Comparative Example 14 | 85.6 | 12.3 |
| Comparative Example 15 | 77.3 | 28.5 |
| Comparative Example 16 | 66.2 | 30.5 |
| Comparative Example 17 | 68.2 | 26.5 |
| Comparative Example 18 | 63.2 | 30.5 |
| Comparative Example 19 | 82.6 | 12.1 |

### Evaluation 3: Rapid Charging Effect

The rechargeable lithium batteries according to the Examples and Comparative Examples were charged and discharged in a chamber at 35 °C for 300 cycles under the condition of 0.33 C to 2.75 C charge (CC/CV, 4.25 V, 0.025 C cut-off) and 0.33 C discharge (CC, 2.75 V cut-off), and then a remaining capacity and a direct-current internal resistance (DCIR) were measured and calculated according to Equation 2 above and Table 4 lists the results as follows.

**Table 4**

| Category | Remaining capacity (%) | DCIR increase rate (%) |
|---|---|---|
| Example 1 | 85.10 | 24.29 |
| Example 2 | 85.40 | 24.00 |
| Example 3 | 84.30 | 20.30 |
| Example 4 | 84.00 | 19.50 |
| Comparative Example 1 | 74.61 | 58.00 |
| Comparative Example 2 | 55.30 | 45.30 |
| Comparative Example 3 | 54.60 | 47.10 |
| Comparative Example 5 | 61.30 | 55.36 |
| Comparative Example 5 | 61.00 | 56.10 |
| Comparative Example 6 | 80.96 | 35.00 |
| Comparative Example 7 | 80.02 | 35.20 |
| Comparative Example 8 | 77.00 | 45.30 |
| Comparative Example 9 | 70.05 | 51.20 |
| Comparative Example 10 | 71.20 | 48.00 |
| Comparative Example 11 | 79.59 | 44.00 |
| Comparative Example 12 | 66.50 | 58.60 |
| Comparative Example 13 | 64.30 | 59.10 |
| Comparative Example 14 | 61.50 | 66.00 |
| Comparative Example 15 | 60.10 | 75.00 |
| Comparative Example 16 | 59.50 | 50.01 |
| Comparative Example 17 | 60.10 | 45.30 |
| Comparative Example 18 | 61.50 | 43.00 |
| Comparative Example 19 | 83.20 | 30.30 |

### Comprehensive Evaluation

In Comparative Examples 2 to 5, instead of Compound 1, or Compound 4 or 5, whose structure was partially similar to that of Compound 1 and whose function was different from that of Compound 1, was applied to execute experiments in accordance with the Evaluation Examples, and as a result, a direct-current internal resistance (DCIR) increase rate was measured to be high and there was a reduction in high-temperature storage, high-temperature lifetime effect, and rapid charging effect.

In addition, only one of Compound 1 and Compound 2 was added in Comparative Examples 6 to 11, and thus it was ascertained that the DCIR increase rate was measured to be high and there was a reduction in high-temperature storage, high-temperature lifetime effect, and rapid charging effect, compared to the Examples and Comparative Examples 2 to 5 as well.

Moreover, as a result of comparison of Comparative Examples 12 to 19 with the Examples, it was ascertained that a content ratio and a total content of Compound 1 and Compound 2 has an effect on the DCIR increase rate.

An electrolyte according to an embodiment for a rechargeable lithium battery may achieve stabilization of an electrode and suppression or reduction of resistance (e.g., electrical resistance) increase, and thus, there may be an effect of improvement in high-temperature lifetime characteristics.

While the subject matter of this disclosure has been described in connection with what is presently considered to be practical example embodiments, it is to be understood that the present disclosure is not limited to the disclosed embodiments and is intended to cover various modifications and equivalent arrangements included within the scope of the appended claims, and equivalents thereof, and therefore the aforementioned embodiments should be understood to be examples and not limiting this disclosure in any way.

## Claims

1. An electrolyte for a rechargeable lithium battery, the electrolyte comprising:
a non-aqueous organic solvent;
a lithium salt; and
an additive,
wherein the additive comprises Compound 1 represented by Chemical Formula 1 and Compound 2 represented by Chemical Formula 2,

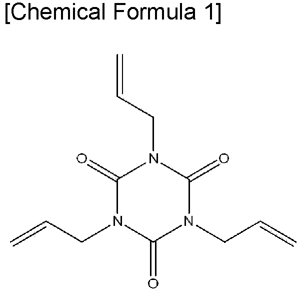

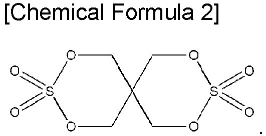

2. The electrolyte as claimed in claim 1, wherein Compound 1 is present in an amount of 0.01 wt% to 1 wt% relative to a total weight of the electrolyte.

3. The electrolyte as claimed in claim 1, wherein the additive is present in an amount of 0.1 wt% to 2 wt% relative to a total weight of the electrolyte.

4. The electrolyte as claimed in claim 1 or 2, wherein an amount of Compound 1 is less than an amount of Compound 2.

5. The electrolyte as claimed in claim 4, wherein Compound 2 is present in an amount of 1 to 10 parts by weight relative to 1 part by weight of the Compound 1.

6. The electrolyte as claimed in one of the preceding claims, wherein the non-aqueous organic solvent comprises at least one selected from ethylene carbonate (EC), propylene carbonate (PC), propyl propionate (PP), ethylmethyl carbonate (EMC), dimethyl carbonate (DMC), diethyl carbonate (DEC), dipropyl carbonate (DPC), methylpropyl carbonate (MPC), ethylpropyl carbonate (EPC), methylethyl carbonate (MEC), and butylene carbonate (BC).

7. The electrolyte as claimed in claim 6, wherein the non-aqueous organic solvent comprises ethylene carbonate (EC), ethylmethyl carbonate (EMC), and dimethyl carbonate (DMC).

8. The electrolyte as claimed in one of the preceding claims, wherein the lithium salt comprises at least one selected from LiPF₆, LiBF₄, LiSbF₆, LiAsF₆, LiClO₄, LiAlO₂, LiAlCl₄, LiPO₂F₂, LiCI, Lil, LiN(SO₃C₂F₅)₂, Li(FSO₂)₂N, lithium bis(fluorosulfonyl)imide (LiFSI), and LiC₄F₉SO₃.

9. The electrolyte as claimed in one of the preceding claims, wherein a concentration of the lithium salt is in a range of 0.1 M to 2.0 M.

10. A rechargeable lithium battery, comprising;
a positive electrode that comprises a positive electrode active material;
a negative electrode that comprises a negative electrode active material; and
the electrolyte as claimed in claim 1.

11. The rechargeable lithium battery as claimed in claim 10, wherein the positive electrode active material comprises a lithium metal oxide represented by Chemical Formula 3,
[Chemical Formula 3] LiₐNi_{1-b-c}Co_{b}X_{c}O_{2-α}D_{α}
wherein in Chemical Formula 3,
X is selected from Al, Mn, Cr, Fe, Mg, Sr, V, and a rare-earth element,
D is selected from F, S, and P,
0.90≤a≤1.8,
0≤b≤0.5,
0≤c≤0.5, and
0≤α<2.

12. The rechargeable lithium battery as claimed in claim 11, wherein the positive electrode active material comprises a lithium metal oxide represented by Chemical Formula 3-1,
[Chemical Formula 3-1] LiₐNi_{1-b-c}Co_{b}X_{c}O₂
wherein in Chemical Formula 3-1,
X is Al or Mn,
0.90≤a≤1.8,
0≤b≤0,5, and
0≤c≤0,5.

13. The rechargeable lithium battery as claimed in one of claim 10 or 12, wherein the lithium metal oxide is LiNi_{0,33}Co_{0,33}Mn_{0,33}O₂ or LiNi_{0,84}Co_{0,12}Al_{0,04}O₂.

14. The rechargeable lithium battery as claimed in one of claims 10 to 13, wherein the negative electrode active material comprises a carbon-based negative electrode active material, a silicon-based negative electrode active material, a tin-based negative electrode active material, or a combination thereof.

15. The rechargeable lithium battery as claimed in one of claims 10 to 14, wherein the positive electrode further comprises a binder and/or an electrically conductive material.
